# EUROPEAN PATENT APPLICATION

(11) **EP 4 570 738 A1**
(43) Date of publication of application: **18.06.2025**
(21) Application number: 24210018.8
(22) Date of filing: 31.10.2024
(51) Int. Cl.: B66F 9/075

(54) **LOAD WHEEL MOUNTING STRUCTURE FOR REACH TYPE FORKLIFT TRUCK**

(30) Priority: 11.12.2023 KR 20230178850
(71) Applicant: Doosan Bobcat Korea Co., Ltd., Incheon 22503 (KR)
(72) Inventor: SEO, Yongmin, 22503 Incheon (KR)
(74) Representative: Isarpatent

(57) **Abstract**

The present disclosure provides a load wheel mounting structure for a reach type forklift truck, which is used to mount a load wheel on a pair of reach legs that extend forward of the reach type forklift truck, the load wheel mounting structure including: a wheel assembly including the load wheel which is rotatably mounted; and an outer frame that holds the wheel assembly, wherein, after the wheel assembly is inserted downward from the top of the outer frame, the wheel assembly is assembled to the outer frame by a first bolt that is inserted from a side.

## Description

### TECHNICAL FIELD

The present disclosure relates to a load wheel mounting structure for a reach type forklift truck, and more particularly, to a load wheel mounting structure including a wheel assembly and an outer frame, that allows quick replacement of a load wheel of a reach type forklift truck.

### BACKGROUND

In general, a forklift is an industrial vehicle used to lift and move heavy materials, which is mainly used in indoor workplaces, construction sites, etc. to move materials over short distances or to load or unload materials to or from delivery vehicles.

Such forklift trucks are divided into standard forklift trucks in which a mast assembly only does the work of raising and lowering the load and reach type forklift trucks in which the mast assembly is configured to move forward and backward.

A standard forklift truck has mast rails that are vertically placed, a carriage that can be vertically raised or lowered along the mast rails, and a counterweight provided at the rear of the vehicle's body.

The carriage is vertically raised or lowered by means of lift chains, and a pair of forks for lifting the load is provided in front of the carriage in such a way that their width is adjustable.

Standard forklift trucks generally employ front-wheel operation and rear-wheel steering.

On the other hand, reach type forklift trucks have no counterweight and instead have a pair of legs that protrude forward of the forklift.

Reach forklift trucks generally employ rear-wheel operation and rear-wheel steering, and the driver drives the forklift in a standing position.

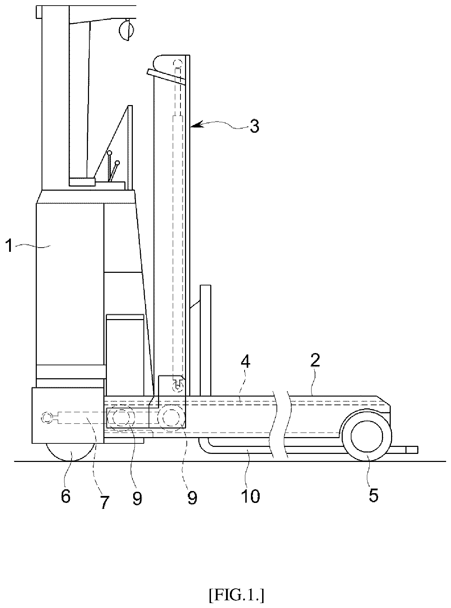

FIG. 1 depicts a basic structure of a conventional reach type forklift truck.

As illustrated in FIG. 1, the reach type forklift truck has a pair of reach legs 2 at a lower portion in front of a vehicle body 1, that extend forward in parallel across a given width.

The mast assembly 3 is guided along reach rails 4 that are respectively installed on the pair of reach legs 2, so as to move forward and backward.

Load wheels 5 are mounted to the front of the reach legs 2, and driving wheels 6 are mounted to a bottom face of the vehicle body 1 to perform steering as well as operation, thereby allowing the vehicle to move and change directions.

A reach cylinder 7 is installed between the pair of reach legs 2 to move the mast assembly 3 forward and in reverse.

By the way, replacing a load wheel of such a reach type forklift truck requires a jack equipment by means of an external device and involves difficulties in assembling and disassembling.

### [Prior Art Document]

### [Patent Document]

(Patent Document 1) Korean Utility Model Registration No. 20-0216614 (registered on April 2, 2001).

### SUMMARY

The present disclosure has been devised to solve the above-mentioned problems occurring in the conventional art, and an aspect of the present disclosure is to provide a load wheel mounting structure for a reach type forklift truck, that does not require a jack equipment by an external device when replacing a load wheel of the reach type forklift truck, and that facilitates replacement and assembly within a short time.

An exemplary embodiment of the present disclosure provides a load wheel mounting structure for a reach type forklift truck, which is used to mount a load wheel on a pair of reach legs that extend forward of the reach type forklift truck, the load wheel mounting structure including: a wheel assembly including the load wheel which is rotatably mounted; and an outer frame that holds the wheel assembly, wherein, after the wheel assembly is inserted downward from the top of the outer frame, the wheel assembly is assembled to the outer frame by a first bolt that is inserted from a side.

Furthermore, the wheel assembly may include two side plates, the load wheel may be positioned between the two side plates, and the two side plates each may have a plate hole through which the first bolt penetrates.

Furthermore, a hollow bushing may be disposed between the two side plates at portions corresponding to the plate holes, and opposite ends of the bushing may be fixed to inner faces of the side plates, respectively, wherein a bushing hole, which is a hollow space that extends longitudinally, may be formed inside the bushing.

Furthermore, the outer frame may include two side frames that are disposed in parallel to each other.

Furthermore, the two side frames each may have a frame hole through which the first bolt penetrates.

Furthermore, the frame holes may be tapered in such a way as to become smaller in diameter inwardly from the outside of the outer frame.

Furthermore, the first bolt may have a bolt head that is tapered to correspond to the tapered frame holes.

Furthermore, the wheel assembly includes a first nut may be coupled to a threaded portion of the first bolt penetrated through the frame holes of the two side frames, wherein the first nut may be tapered to correspond to the tapered frame holes.

Furthermore, the frame holes and the bushing hole may be automatically aligned as the first bolt penetrates through the frame holes and the bushing hole.

Furthermore, a stopper may be formed on an inner face of the outer frame to stop the wheel assembly from moving down when inserted to be held in the outer frame.

Furthermore, the outer frame may include two side frames that are disposed in parallel to each other, and the stopper is formed on an inner face of each of the two side frames.

Furthermore, the stopper may be slanted downward.

Furthermore, the wheel assembly may include two side plates between which the load wheel is interposed, and the wheel assembly is stopped from moving down as the two side plates get stuck at the stopper.

Furthermore, the outer frame may include two side frames that are disposed in parallel to each other and a front frame that is disposed at the front of the outer frame and connected to the two side frames, wherein a nut portion which a second bolt may be screwed to and penetrates is fixed onto an inner face of the front frame.

Furthermore, as the second bolt turns in one direction and protrudes downward, the end of a threaded portion of the second bolt is supported on the ground, whereby the wheel assembly and the outer frame are lifted upward.

The thus-constructed load wheel mounting structure for a reach type forklift truck according to the present disclosure has the advantage of making it quite easy to replace a load wheel since the wheel assembly can be easily detached from or assembled to the outer frame simply by removing or fastening the first bolt by turning it.

Another advantage is that a load wheel can be easily replaced without a jack equipment, since the reach legs can be lifted to a desired height by turning the second bolt which is fastened to penetrate the nut portion fixedly mounted to the front frame.

### BRIEF DESCRIPTION OF THE DRAWINGS

FIG. 1 depicts a basic structure of a conventional reach type forklift truck.
FIGS. 2 and 3 are perspective views of a load wheel mounting structure for a reach type forklift truck according to an embodiment of the present disclosure, in a reach leg of the reach type forklift truck.
FIG. 4 depicts a wheel assembly to be inserted into a reach leg, in a load wheel mounting structure for a reach type forklift truck according to an embodiment of the present disclosure.
FIG. 5 depicts an outer frame positioned outside a reach leg and holding an inserted wheel assembly, in a load wheel mounting structure for a reach type forklift truck according to an embodiment of the present disclosure.
FIG. 6 depicts a side of the outer frame of FIG. 5.
FIG. 7 depicts the outer frame of FIG. 5 before the wheel assembly of FIG. 4 is inserted into it, and FIG. 8 depicts the outer frame of FIG. 5 after the wheel assembly of FIG. 4 is inserted into it.
FIG. 9 depicts how the wheel assembly of FIG. 8 inserted into the outer frame is assembled by being fastened with a hinge bolt.
FIG. 10 depicts the appearance of a tapered hole that is formed on a side frame to align the outer frame and the bushing hole of the wheel assembly, so as to fasten the wheel assembly to the outer frame with a hinge bolt as in FIG. 9.

### DETAILED DESCRIPTION

Hereinafter, an embodiment of a load wheel mounting structure for a reach type forklift truck according to the present disclosure will be described in detail with reference to the drawings.

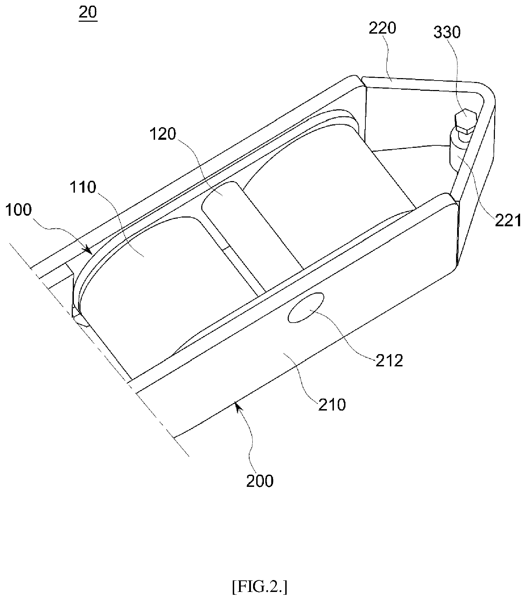

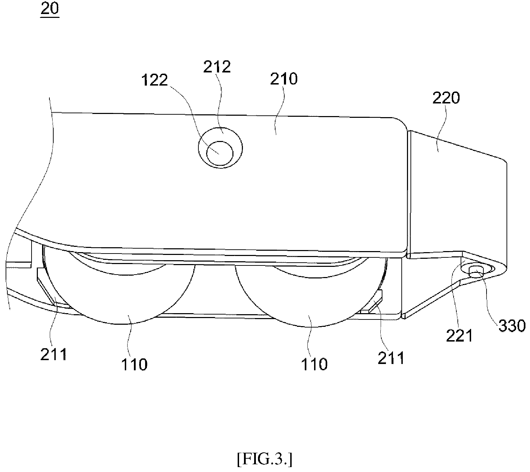

FIGS. 2 and 3 are perspective views of a load wheel mounting structure for a reach type forklift truck according to an embodiment of the present disclosure, in a reach leg of the reach type forklift truck. Referring to FIGS. 2 and 3, a load wheel mounting structure for a reach type forklift truck according to an embodiment of the present disclosure will be described.

A load wheel 110 is mounted at the front of each of a pair of reach legs 20 that protrude forward of the reach type forklift truck. Two load wheels 110 may be mounted to each reach leg 20.

The load wheel mounting structure for the reach type forklift truck according to an embodiment of the present disclosure includes a wheel assembly 100 including the load wheel 110 which is rotatably mounted and an outer frame 200 that holds the wheel assembly 100.

The wheel assembly 100 is assembled by being inserted downward from the top of the outer frame 200. Once the wheel assembly 100 is inserted into the outer frame 200, a first bolt 310 may be inserted from a side and fastened to a first nut on the opposite side, whereby the wheel assembly 100 is assembled and mounted to the outer frame 200.

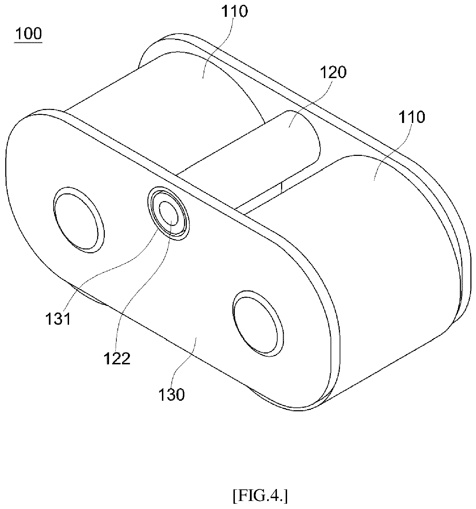

FIG. 4 depicts a wheel assembly 100 to be inserted into a reach leg, in a load wheel mounting structure for a reach type forklift truck according to an embodiment of the present disclosure.

Referring to FIG. 4, a structure of the wheel assembly 100 will be described in detail.

The wheel assembly 100 includes two side plates 130 that extend in a direction perpendicular to an axle of the load wheel 110.

The load wheel 110 is positioned between the two side plates 130 and fixed to the two side plates 130 in such a way as to be rotatable about the axle.

The two side plates 130 each have a plate hole 131 through which the first bolt 310 penetrates.

A hollow bushing 120 is disposed between the two side plates 130. Opposite ends of the bushing 120 are fixed to inner faces of the side plates 130, respectively, at portions corresponding to the plate holes 131.

A bushing hole 122, which is a hollow space that extends longitudinally, is formed inside the bushing 120. The first bolt 310 is inserted from a side, and the side penetrates through the plate holes 131 of the side plates 130 and the bushing hole 122.

Once the first bolt 310 is fastened by penetrating through the plate holes 131 and the bushing hole 122, the wheel assembly 100 may rotate about the first bolt 310 as the axis of rotation.

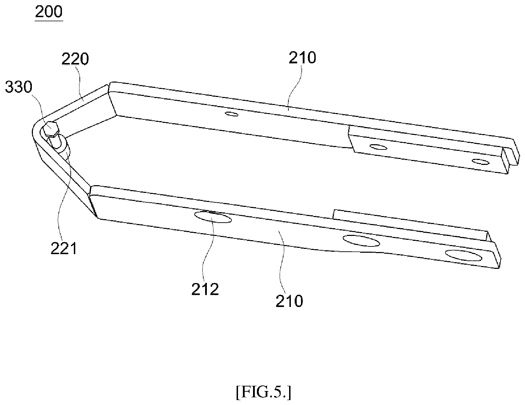

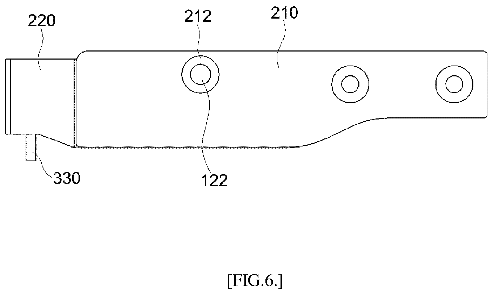

FIG. 5 depicts an outer frame positioned outside a reach leg and holding an inserted wheel assembly, in a load wheel mounting structure for a reach type forklift truck according to an embodiment of the present disclosure. FIG. 6 depicts a side of the outer frame of FIG. 5.

Referring to FIGS. 5 and 6, a structure of the outer frame 200 will be described in detail.

The outer frame 200 includes two side frames 210 disposed in parallel to each other and a front frame 220 disposed at the front of the outer frame 200 and connected to the two side frames 210.

The two side frames 210 each have a frame hole 212 through which the first bolt 310 penetrates.

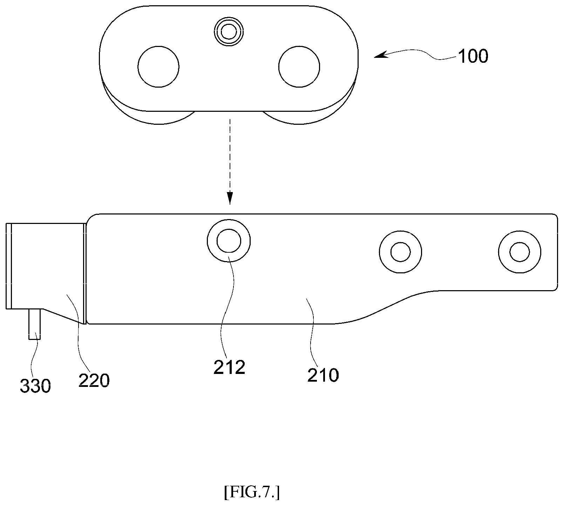

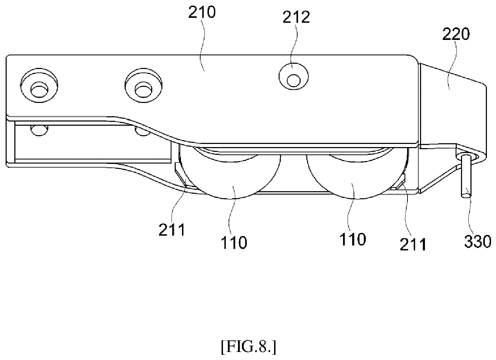

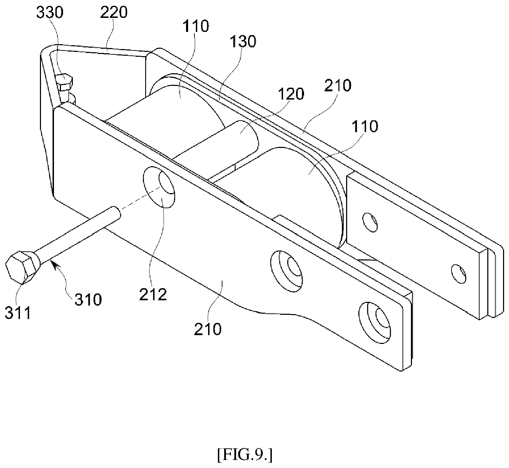

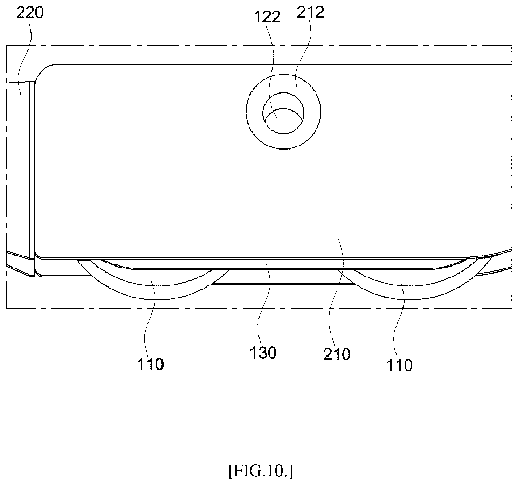

FIG. 7 depicts the outer frame of FIG. 5 before the wheel assembly of FIG. 4 is inserted into it, and FIG. 8 depicts the outer frame of FIG. 5 after the wheel assembly of FIG. 4 is inserted into it. FIG. 9 depicts how the wheel assembly of FIG. 8 inserted into the outer frame is assembled by being fastened with a hinge bolt. FIG. 10 depicts the appearance of a tapered hole that is formed on a side frame to align the outer frame and the bushing hole of the wheel assembly, so as to fasten the wheel assembly to the outer frame with a hinge bolt as in FIG. 9.

Referring to FIGS. 7 to 10, a detailed description will be given below of how the wheel assembly 100 is assembled and mounted to the outer frame 200 by being inserted into it.

The frame holes 212 are tapered in such a way as to become smaller in diameter inwardly from the outside of the outer frame 200. A bolt head 311 of the first bolt 310 is tapered to correspond to the tapered frame holes 212.

Since the frame holes 212 and the bolt head 311 of the first bolt 310 inserted into the frame holes 212 are tapered, the frame holes 212 and the bushing hole 122 are automatically aligned as the first bolt 310 is inserted into the frame holes 212 and then into the bushing hole 122 of the wheel assembly 100.

Meanwhile, a threaded portion of the first bolt 310 penetrated through the frame holes 212 of the two side frames 210 is screwed to a first nut (not shown). The first nut is tapered so as to correspond to the tapered frame holes 212.

Since the first nut is tapered too, the frame holes 212 and the bushing hole 122 may be aligned more precisely.

That is, the first bolt 310 having the tapered bolt head 311 is screwed to the tapered first nut by penetrating through the tapered frame holes 212 and the bushing hole 122, so that the frame holes 212 and the bushing hole 122 are automatically aligned.

Once the frame holes 212 and the bushing hole 122 are aligned, the wheel assembly 100 comes into alignment with the outer frame 200, and, hereupon, they are assembled together.

That is, simply by attaching the wheel assembly 100 to the outer frame by means of the first bolt 310, they may be easily assembled together in alignment with each other.

The wheel assembly 100 may be easily detached from the outer frame 200 simply by removing the first bolt 310 by turning it.

Therefore, the load wheel mounting structure for the reach type forklift truck according to an embodiment of the present disclosure makes it quite easy to replace a load wheel.

Meanwhile, a stopper 211 is formed on an inner face of the outer frame 200 to stop the wheel assembly 100 from moving down when inserted to be held in the outer frame 200.

More specifically, the outer frame 200 includes two side frames 210 that are disposed in parallel to each other, and the stopper 211 may be formed on an inner face of each of the two side frames 210.

The wheel assembly 100 includes two side plates 130 between which the load wheel 110 is interposed. The wheel assembly 100 is stopped from moving down as the two side plates 130 get stuck at the stopper 211, and the wheel assembly 100 may be mounted to the outer frame 200 while stopped from moving.

Since the stopper 211 is slanted downward, it also serves as a guide so that the wheel assembly 100 is inserted into the right place on the outer frame 200.

Meanwhile, the wheel assembly 100 includes two side plates 130, and the load wheel 110 is disposed between the two side plates 130.

The wheel assembly 100 is stopped from moving down as the two side plates 130 get stuck at the stopper 211.

Apart from the two side frames 210 disposed in parallel to each other, the outer frame 200 includes a front frame 220 that is disposed at the front of the outer frame 200 and connected to the two side frames 210.

A nut portion 221 which a second bolt 330 is screwed to and penetrates is fixed onto an inner face of the front frame 220.

As the second bolt 330 turns in one direction and protrudes downward, the end of a threaded portion of the second bolt 330 is supported on the ground, whereby the wheel assembly 100 and the outer frame 200 are lifted upward.

When replacing a load wheel 110 of the reach type forklift truck, the reach legs 20 need to be lifted to a certain height in order to facilitate the replacement of the load wheel 110.

Conventionally, lifting the reach legs 20 involves the trouble of having to a jack equipment by means of an external device.

In a load wheel mounting structure for a reach type forklift truck according to an embodiment of the present disclosure, the reach legs 20 can be lifted to a desired height by the rotation of the second bolt 330 which is fastened by penetrating the nut portion 221 fixedly mounted to the front frame 220. Therefore, the load wheel 110 can be easily replaced without a jack equipment.

The above description is simply given for illustratively describing the technical spirit of the present disclosure, and those skilled in the art to which the present disclosure pertains will appreciate that various modifications, changes, and substitutions are possible without departing from the essential characteristic of the present disclosure. Therefore, the present embodiments are provided for illustrative purposes only but not intended to limit the technical concept of the present disclosure. The scope of the technical spirit of the present disclosure is not limited thereby. The protective scope of the present disclosure should be construed based on the following claims, and all the technical spirit in the equivalent scope thereto should be construed as falling within the scope of the present disclosure.

## Claims

1. A load wheel mounting structure for a reach type forklift truck, which is used to mount a load wheel (110) on a pair of reach legs (20) that extend forward of the reach type forklift truck, the load wheel mounting structure comprising:
a wheel assembly (100) including the load wheel which is rotatably mounted; and
an outer frame (200) that holds the wheel assembly,
wherein, after the wheel assembly is inserted downward from the top of the outer frame, the wheel assembly is assembled to the outer frame by a first bolt (310) that is inserted from a side.

2. The load wheel mounting structure of claim 1, wherein the wheel assembly includes two side plates (130), the load wheel is positioned between the two side plates, and the two side plates each have a plate hole (131) through which the first bolt penetrates.

3. The load wheel mounting structure of claim 2, wherein a hollow bushing (120) is disposed between the two side plates at portions corresponding to the plate holes, and opposite ends of the bushing are fixed to inner faces of the side plates, respectively,
wherein a bushing hole (122), which is a hollow space that extends longitudinally, is formed inside the bushing.

4. The load wheel mounting structure of claim 2, wherein the outer frame (200) includes two side frames (210) that are disposed in parallel to each other.

5. The load wheel mounting structure of claim 4, wherein the two side frames (210) each have a frame hole (212) through which the first bolt penetrates.

6. The load wheel mounting structure of claim 5, wherein the frame holes (212) are tapered in such a way as to become smaller in diameter inwardly from the outside of the outer frame (200).

7. The load wheel mounting structure of claim 6, wherein the first bolt (310) has a bolt head (311) that is tapered to correspond to the tapered frame holes (212).

8. The load wheel mounting structure of claim 7, wherein the wheel assembly (100) includes a first nut is coupled to a threaded portion of the first bolt penetrated through the frame holes of the two side frames,
wherein the first nut is tapered to correspond to the tapered frame holes.

9. The load wheel mounting structure of claim 8, wherein the frame holes (212) and the bushing hole (122) are automatically aligned as the first bolt penetrates through the frame holes and the bushing hole.

10. The load wheel mounting structure of claim 1, wherein a stopper (211) is formed on an inner face of the outer frame to stop the wheel assembly from moving down when inserted to be held in the outer frame.

11. The load wheel mounting structure of claim 10, wherein the outer frame (200) includes two side frames that are disposed in parallel to each other, and the stopper is formed on an inner face of each of the two side frames.

12. The load wheel mounting structure of claim 11, wherein the stopper (211) is slanted downward.

13. The load wheel mounting structure of claim 11, wherein the wheel assembly (100) includes two side plates between which the load wheel is interposed, and the wheel assembly is stopped from moving down as the two side plates get stuck at the stopper.

14. The load wheel mounting structure of claim 1, wherein the outer frame includes two side frames that are disposed in parallel to each other and a front frame (220) that is disposed at the front of the outer frame and connected to the two side frames,
wherein a nut portion (221) which a second bolt (330) is screwed to and penetrates is fixed onto an inner face of the front frame.

15. The load wheel mounting structure of claim 14, wherein, as the second bolt turns in one direction and protrudes downward, the end of a threaded portion of the second bolt is supported on the ground, whereby the wheel assembly and the outer frame are lifted upward.
